# EUROPÄISCHE PATENTSCHRIFT

(11) **EP 0 566 713 B1**
(45) Veröffentlichungstag und Bekanntmachung des Hinweises auf die Patenterteilung: **20.12.1995**
(21) Anmeldenummer: 92921883.2
(22) Anmeldetag: 16.10.1992
(51) Int. Cl.: B29B 17/02, B29C 47/68

(54) **VERFAHREN UND VORRICHTUNG ZUM KONTINUIERLICHEN FILTERN UND TRENNEN THERMOPLASTISCHER KUNSTSTOFFE**
PROCESS AND DEVICE FOR CONTINUOUSLY FILTERING AND SEPARATING THERMOPLASTIC MATERIALS
PROCEDE ET DISPOSITIF DE FILTRAGE EN CONTINU ET DE SEPARATION DE MATIERES THERMOPLASTIQUES

(30) Priorität: 10.11.1991 DE 4137298
(43) Veröffentlichungstag der Anmeldung: 27.10.1993
(73) Patentinhaber: SIEBERT, Martin, 12047 Berlin (DE)
(72) Erfinder: SIEBERT, Martin, 12047 Berlin (DE)
(74) Vertreter: Habbel, Hans-Georg
(86) Internationale Anmeldenummer: DE9200882
(87) Internationale Veröffentlichungsnummer: WO9308975

(56) Entgegenhaltungen:
- EP-A- 0 144 495
- EP-A- 0 411 163
- DE-A- 3 335 364
- GB-A- 1 230 563

## Beschreibung

Die Erfindung bezieht sich auf ein Verfahren zur kontinuierlichen Filtrierung von Kunststoffschmelze und zur Trennung verschiedener thermoplastischer Kunststoffe aufgrund ihrer unterschiedlichen Schmelzeigenschaften bei Temperaturerhöhung. Weiterhin bezieht sich die Erfindung auf eine Vorrichtung zur Durchführung dieses Verfahrens.

Kunststoffschmelzfilter dienen dazu, Verunreinigungen aus thermoplastischen Kunststoffen bei deren Verarbeitung zu entfernen. Bei der Verarbeitung von Kunststoffneuware können unvorhergesehene Verunreinigungen den Produktionsablauf erheblich stören und auch zum späteren Versagen des Produktes führen.

Beim Kunststoffrecycling gewinnt die Filtertechnik neue Bedeutung.

Gebrauchte Kunststoffe sind in der Regel verschmutzt, und selbst durch intensives Waschen vor der Verarbeitung lassen sich Verunreinigungen im allgemeinen nicht ganz entfernen. Durch das Mahlen oder Schreddern werden Verunreinigungen zusätzlich in den Kunststoff eingearbeitet, welche durch Waschen nicht mehr entfernt werden können. Papier- und Holzanteile bereiten bei der Sink- Schwimmtrennung Probleme, so daß auch hier durch die unzureichende Trennung weitere Verschmutzungen in die Verarbeitung gelangen können. Ein weiteres Problem bilden Kunststoffverbünde, welche oft manuell oder wirtschaftlich nicht zu trennen sind. Metallische Anteile können an Filtern erhebliche Schäden hervorrufen.

Beim Kunststoffrecycling ist der wirtschaftliche Spielraum sehr eng, besonders bei der Verarbeitung der Massenkunststoffe. Schon wenige Prozente an Verunreinigungen können nach dem heutigen Stand der Filtertechnik durch die Filtrierung die Verarbeitung unrentabel machen. Treten harte oder spröde Verschmutzungsanteile auf, dann ist eine Filtrierung oft nicht mehr möglich.

Die Filtertechnik ist beim Kunststoffrecycling ein kostenbestimmender Faktor geworden sowohl bei den Produktions- als auch bei den Investitionskosten.

Die Kunststoffilter nach dem Stand der Technik arbeiten fast ausnahmslos nach dem Siebprinzip. Es gibt kontinuierlich und diskontinuierlich arbeitende Typen. Die Siebeinsätze müssen nach dem Gebrauch in der Regel manuell entfernt werden, und es gibt für sie keine weitere Verwendung. Bei Filtern mit Rückstromreinigung wird die Standzeit der Siebeinsätze zwar erhöht, der Siebwechsel jedoch auch hier nicht vermieden. Des weiteren sind diese Filtertypen relativ teuer in ihrer Anschaffung.

Über einem Anteil von 5 bis 10 % an Verunreinigungen ist auch bei diesen Filtertypen eine wirtschaftliche Filtrierung nicht mehr möglich.

Aus der GB-A-12 30 563 ist eine Filtereinrichtung bekanntgeworden, bei welcher in den Weg zwischen einer Extruderschnecke und eines Verarbeitungswerkzeuges eine Filtereinrichtung eingeschaltet ist, die aus einem konischen Filterbolzen besteht, der in einem entsprechend angepaßten konischen Gehäuse angeordnet ist. Auf der Außenseite des Filterbolzens sind zwei Sorten von Nuten ausgearbeitet, wobei in die eine Nutart das von der Extruderschnecke geförderte geschmolzene Kunststoffmaterial eintritt und dann unter Überwindung eines den eigentlichen Filtersteg bildenden Steges in eine zweite Nut gelangt, von der es aus zum Verarbeitungswerkzeug fließen kann. Die zweite Nut steht natürlich mit dem von der Extruderschnecke kommenden Gut nicht direkt in Verbindung. Die Filtrierung oder Absiebung erfolgt also durch die Stege, die zwischen den beiden Nutarten vorgesehen sind. Der bei der bekannten Einrichtung durch die Stege gebildete Filterspalt kann nur durch eine oszillierende Drehbewegung freigehalten werden, wobei diese oszillierende Drehbewegung kurzseitig im Filterspalt eine Strömungsumkehr zur Reinigung und Freilegung des Filterspaltes erzielen soll. Da hier aber Druckdifferenzen von ca. 100 bar auftreten, stellen sich für die Strömungsumkehr erhebliche Schwierigkeiten ein.

Der Erfindung liegt die Aufgabe zugrunde, ein Verfahren zum kontinuierlichen Filtern und Trennen thermoplastischer Kunststoffe zu schaffen, das kostengünstig arbeitet und mit dem auch rezyklierte Kunststoffe, d. h. also verschmutzte Kunststoffe, einwandfrei bearbeitet werden können.

Diese der Erfindung zugrundeliegende Aufgabe wird durch die Lehre des Hauptanspruches gelöst.

Vorteilhafte Ausgestaltungen sind in den Unteransprüchen 2 bis 10 erläutert.

Die Erfindung bezieht sich weiterhin auf eine Vorrichtung zur Durchführung dieses Verfahrens. Diese Vorrichtung ist im wesentlichen dadurch gekennzeichnet, daß eine in einem Zylinder angeordnete, umlaufend angetriebene zweigängige Schnecke vorgesehen wird, deren Außendurchmesser kleiner als der Innendurchmesser des Zylinders ist und so einen Filterspalt bildet, wobei der erste Schneckengang zur Schneckeneingangsseite hin offen und der zweite Schneckengang zur Schneckenausgangsseite hin offen ist.

Nützt man den Spalt zwischen dem Steg einer rotierenden Schnecke und der umhüllenden Zylinderwand als Filterspalt, so ergeben sich prinzipielle Vorteile. Durch die Relativbewegung von Schnecke und Zylinder bzw. zwischen Steg und Zylinderwand, tritt im Spalt Scherung auf. Dadurch kann der Spalt selbst nicht verstopfen. Da diese Scherung auch vor dem Filterspalt im Kunststoff oder dem sich angesammelten Filterkuchen auftritt, wird dieser immer wieder aufgebrochen und neu verdichtet. Dadurch setzt er dem durchfließenden Kunststoff weniger Widerstand entgegen, wodurch der Durchströmungsdruckverlust im Filter verringert wird. Kleinere Schmutzpartikel können durch die Scherströmung koagulieren und der Filterkuchen wird gleichzeitig verdichtet. Durch die Scherung im Filterspalt und die Strukturviskosität, wie sie beim Kunststoff gegeben ist, kann dieser leichter durch den Spalt hindurchfließen. Dies verringert ebenfalls den Druckverlust.

Der Filterkuchen wird durch die Drehbewegung der Schnecke zum Gangende transportiert, wo er sich ansammelt und über eine Bohrung in der Zylinderwand nach außen abgelassen werden kann. Der zu filternde Kunststoff strömt nach dem Durchgang durch den Filterspalt separat weiter.

Verschmutzung, welche aufgrund ihrer Feinheit doch noch durch den Filterspalt hindurchkommt, wird durch die Scherwirkung im Spalt zerteilt bzw. in der Kunststoffschmelze dispergiert.

Die Spaltweite kann variabel einstellbar sein, indem eine konische Schnecke in einen konischen Zylinder unterschiedlich weit hineingeschoben und positioniert werden kann.

Die Länge des Filterspalts bzw. die effektiv zur Verfügung stehende Filterfläche kann durch die Gangsteigung und Anzahl der Gänge sowie durch den Schneckendurchmesser und durch die Schneckenlänge festgelegt werden.

Weitere vorteilhafte Ausgestaltungen sind in den Unteransprüchen erläutert.

Ein Ausführungsbeispiel der Erfindung wird nachfolgend anhand der Zeichnungen erläutert. Die Zeichnungen zeigen dabei in
- Fig. 1: eine schematische Darstellung eines Extruders mit nachgeschalteter Siebvorrichtung und hinter der Siebvorrichtung angeordnetem Werkzeug, in
- Fig. 2: eine erste Ausführungsform der erfindungsgemäßen Einrichtung und in
- Fig. 3: eine abgeänderte Ausführungsform der erfindungsgemäßen Siebvorrichtung.

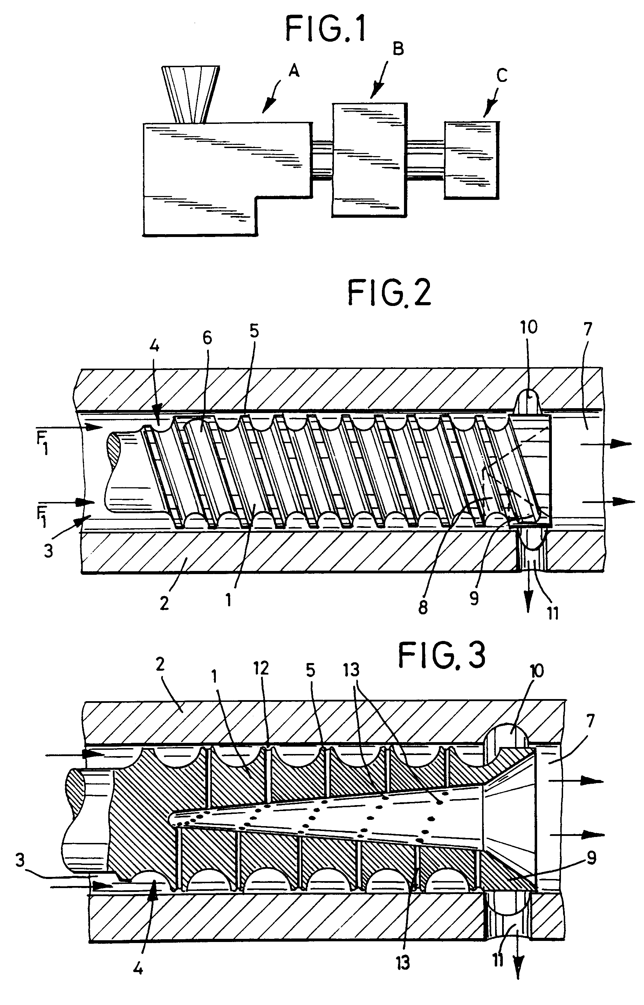

In Fig. 1 ist ein Extruder A dargestellt, in dem in an sich bekannter Weise Kunststoff plastifiziert wird. Diese erzeugte Kunststoffschmelze wird durch eine Siebvorrichtung B hindurchgeführt und in dieser Siebvorrichtung B gereinigt und anschließend einem Werkzeug C zugeführt.

Fig. 2 zeigt eine Vorrichtung mit einer Schnecke 1, die sich in einem Zylinder 2 befindet. Die Kunststoffschmelze fließt zur Schneckeneingangsseite 3 gemäß den Pfeilen F₁ und gelangt in den zur Eingangsseite hin offenen Schneckengang 4. Die Schmelze strömt durch den Filterspalt 5 in den zweiten Schneckengang 6 zur Schneckenausgangsseite 7 über eine Bohrung 8. Der zweite Schneckengang hat zur Eingangsseite keine direkte Verbindung.

Der aufgestaute Filterkuchen im ersten Schneckengang 4 wird durch die Fließbewegung der Schmelze und durch die Drehbewegung der Schnecke 1 zum geschlossenen Gangende 9 transportiert. Beim Gangende befindet sich auf der Zylinderinnenseite eine Ringnut 10, in der sich der Filterkuchen sammeln und über eine Auslaßbohrung 11 ausgetragen werden kann. Die Ringnut 10 kann alternativ auch am Schneckenende auf der Schnecke 1 selbst angebracht sein, in die dann der erste Schneckengang mündet. Der sich in der Ringnut 10 ansammelnde Filterkuchen staut sich bei geschlossener Auslaßbohrung 11 am Schneckenende. Dies führt durch die höhere Viskosität des Filterkuchens im Vergleich zur restlichen Schmelze und durch die Drehbewegung der Schnecke 1 zu einer Druckerhöhung im Bereich der Auslaßbohrung 11. Die Druckdifferenz zwischen dem Eingangsdruck der Schmelze vor Eintritt in die Schnecke 1 und dem Druck an der Auslaßbohrung 11 kann im Zusammenhang mit der Schneckendrehzahl zur Regelung des Filters verwendet werden.

Es ist zweckmäßig, die Schneckendrehzahl der Menge der Verschmutzung anzupassen.

Prinzipiell können auch Schnecken mit mehr als nur zwei Gängen verwendet werden.

Auf der Stegaußenseite können kleine Verbindungsnuten angebracht sein. Auf diese Weise kann die effektiv zur Verfügung stehende Filterfläche vergrößert werden, ohne das Schneckenspiel zu erhöhen.

Fig. 3 zeigt eine weitere Variante. Die Bezeichnungen 1, 2, 3, 4, 7, 9, 10, 11 haben bei beiden Figuren die gleiche Bedeutung.

Auf der Stegaußenseite befindet sich eine Nut 12, welche ihrerseits einen am Anfang und Ende abgeschlossenen Schneckengang bildet. In diese Nut 12 kann die Schmelze nach dem Durchgang durch den Filterspalt fließen, welche dann über Radialbohrungen 13 am Nutgrund weiter in das Schneckeninnere und von dort zur Schneckenausgangsseite 7 geleitet wird. Die Variante gemäß Fig. 3 läßt bei gleicher effektiver Filterfläche eine kompaktere bzw. eine kürzere Bauweise zu.

Der Antrieb der Schnecke kann separat erfolgen oder mit einer vorgeschalteten Extruderschnecke direkt oder über ein Getriebe gekoppelt sein. Es ist eine integrale Bauweise möglich, beider auf einer Schnecke erst der Plastifizierbereichund dann der Separierbereich kommt. Durch eine Verschiebung des gesamten Zylinders kann die Filterfeinheit eingestellt werden. Um eine möglichst flexible Verarbeitungsanlage zu erreichen, ist es möglich, durch einen öffenbaren Bypass in der Zylinderwand die Schmelze im geschlossenen Gangende 9 mit der restlichen Schmelze am Ausgang 7 wieder zusammenzuführen.

Auf diese Weise läßt sich das Filter bzw. die Filterwirkung ab- oder zuschalten.

Es ist möglich, durch eine Hintereinanderschaltung mehrerer Filter und einer Temperaturführung der Schmelze in Stufen von Filter zu Filter, nach unterschiedlichen Thermoplastsorten bzw. Kunststoffsorten zu trennen.

Da es sich bei der Erfindung um einen Filtertyp handelt, bei dem die Menge des Fremdstoffanteils nahezu keine Rolle spielt, können Stoffe bzw. Verbünde verarbeitet und durch Filtrierung getrennt werden, welche bisher einem höherwertigen sortenreinen Recycling nicht mehr oder nur unter größerem Aufwand zugänglich waren. Hierzu zählen insbesondere flächenhafte Verbünde, wie Beschichtungen, Lackierungen und Kaschierungen.

Auch komplexe thermoplastische Bauteile mit metallischem Anteil lassen sich filtern, soweit die metallischen Anteile in ihren Abmessungen in die Schneckengänge des Filters passen.

Als spezielle Anwendung für flächenhafte Verbünde seien hier lackierte Verkleidungen, Autostoßfänger und gewebebeschichtete Fußbodenbeläge genannt, welche nach dem Stand der Technik nur mit größerem Aufwand sortenrein recycelt werden können.

Es werden somit der Kunststoffiltertechnik neue Bereiche mit einer einfachen Technik zugänglich gemacht, die in ihrer Anschaffung und im Betrieb robust, flexibel und kostengünstig ist.

Das Filter ist auch sehr gut als Vorfilter bei einer nachfolgenden Feinfiltrierung geeignet.

## Patentansprüche

1. Verfahren zur kontinuierlichen Filtrierung von Kunststoffschmelze und zur Trennung verschiedener thermoplastischer Kunststoffe aufgrund ihrer unterschiedlichen Schmelzeigenschaften bei Temperaturerhöhung, dadurch gekennzeichnet, daß der Spalt (5), welcher zwischen dem Steg einer rotierenden Schnecke (1) und der Wand eines umhüllenden Zylinders (2) durch die Durchmesserdifferenz zwischen Schneckenaußendurchmesser und Zylinderinnendurchmesser gebildet wird, gezielt als Filterspalt (5) genutzt wird, indem bei einer zweigängigen Schnecke (1) die Schmelze auf der Schneckeneingangsseite (3) nur in einen Schneckengang (4) eintreten und auf der Schneckenausgangsseite (7) nur über den zweiten Gang (6) austreten kann und die beiden Schneckengänge (4, 6) nur eine Verbindung über den Spalt (5) besitzen, so daß Verunreinigungen im ersten Schneckengang (4) zurückgehalten werden.

2. Verfahren nach Anspruch 1, dadurch gekennzeichnet, daß die Schnecke (1) mehr als zwei Gänge besitzt.

3. Verfahren nach einem der Ansprüche 1 oder 2, dadurch gekennzeichnet, daß zusätzliche kleine Nuten (12), die auf der Stegaußenseite angebracht sind und die Gänge verbinden, zur Filtrierung benutzt werden.

4. Verfahren nach einem der vorhergehenden Ansprüche, dadurch gekennzeichnet, daß die Schmelze auf der Schneckeneingangsseite (3) in einen Schneckengang (4) eintreten, jedoch an der Ausgangsseite nicht austreten kann und sich auf der Stirnseite entlang des Schneckensteges eine Nut (12) und sich innerhalb der Nut (12) Bohrungen (13) befinden, über welche die Schmelze in das Schneckeninnere gelangt, von dort im Inneren der Schnecke zum Schneckenende hin strömen kann.

5. Verfahren nach einem der vorhergehenden Ansprüche, dadurch gekennzeichnet, daß der am Spalt (5) gebildete Filterkuchen durch die Drehbewegungen der Schnecke (1) zum abgeschlossenen Gangende transportiert wird und dort über eine Öffnung (11) im Zylinder (2) geregelt nach außen abgelassen werden kann.

6. Verfahren nach einem der vorhergehenden Ansprüche, dadurch gekennzeichnet, daß die Schnecke (1) mit einer vorgeschalteten Plastifizierungsschnecke eines Extruders (A) bezüglich des Antriebes direkt oder durch eine Übersetzung gekoppelt wird.

7. Verfahren nach einem der vorhergehenden Ansprüche, dadurch gekennzeichnet, daß die Spaltweite dadurch regelbar wird, daß eine Schnecke mit konischem Außendurchmesser in einem Zylinder mit konischem Innendurchmesser axial verschoben und positioniert wird.

8. Verfahren nach einem der vorhergehenden Ansprüche, dadurch gekennzeichnet, daß durch eine Hintereinanderschaltung der Verfahrensmaßnahmen und durch gezielte Temperaturführung der Schmelze verschiedene thermoplastische Kunststoffsorten voneinander getrennt werden.

9. Verfahren nach einem der vorhergehenden Ansprüche, dadurch gekennzeichnet, daß beschichtete, lackierte oder mit Gewebe belegte thermoplastische Kunststoffteile stofflich getrennt werden, z. B. lackierte Autostoßfänger, Verkleidungen und beschichtete Bodenbeläge.

10. Vorrichtung zur Durchführung des Verfahrens zur kontinuierlichen Filtrierung von Kunststoffschmelze und zur Trennung verschiedener thermoplastischer Kunststoffe aufgrund ihrer unterschiedlichen Schmelzeigenschaften bei Temperaturerhöhung, gekennzeichnet durch eine in einem Zylinder (2) angeordnete, umlaufend angetriebene zweigängige Schnecke (1), deren Außendurchmesser kleiner als der Innendurchmesser des umgebenden Zylinders (2) ist und so einen Filterspalt (5) bildet, wobei der erste Schneckengang (4) zur Schneckeneingangsseite (3) hin offen und der zweite Schneckengang (6) zur Schneckenausgangsseite (7) hin offen ist.

11. Vorrichtung nach Anspruch 10, gekennzeichnet durch eine mehrgängige Schnecke (1).

12. Vorrichtung nach Anspruch 10 oder 11, gekennzeichnet durch auf der Stegaußenseite der Schnecke (1) angebrachte kleine Nuten (12).

13. Vorrichtung nach einem der vorhergehenden Ansprüche 10 bis 12, gekennzeichent durch einen Hohlraum im Schneckeninneren und Bohrungen (13), die die Nuten (12) mit dem im Schneckeninneren vorgesehenen Hohlraum verbinden, wobei die Schnecke (1) an der Schneckenausgangsseite (7) nach außen hin an ihrem Umfang gegenüber dem Zylinder (2) abgeschlossen ist.

## Claims

1. Process for continuously filtering polymer melt and for separating different thermoplastic materials on the basis of their different melting properties when subjected to a temperature increase, characterized in that the gap (5) which is formed between the flight of a rotating screw (1) and the wall of an enclosing barrel (2) by the difference in diameter between screw outside diameter and barrel inside diameter is specifically used as a filtering gap (5) in that, in the case of a double-channelled screw (1), the melt can enter on the screw input side (3) only into one screw channel (4) and can leave on the screw output side (7) only via the second channel (6) and the two screw channels (4, 6) are connected only via the gap (5), so that impurities are kept back in the first screw channel (4).

2. Process according to Claim 1, characterized in that the screw (1) has more than two channels.

3. Process according to one of Claims 1 or 2, characterized in that additional small grooves (12), which are provided on the outer side of the flight and connect the channels, are used for filtering.

4. Process according to one of the preceding claims, characterized in that the melt can enter on the screw input side (3) into one screw channel (4) but cannot leave on the output side and on the end face there is a groove (12) along the screw flight and, within the groove (12) there are bores (13), via which the melt passes into the interior of the screw, from where it can flow inside the screw to the end of the screw.

5. Process according to one of the preceding claims, characterized in that the filter cake formed at the gap (5) is transported by the rotational movements of the screw (1) to the closed-off end of the channel and can be let out there in a controlled manner via an opening (11) in the barrel (2).

6. Process according to one of the preceding claims, characterized in that the screw (1) is coupled to an upstream plasticating screw of an extruder (A), in drive terms directly or by a transmission.

7. Process according to one of the preceding claims, characterized in that the gap width can be controlled by a screw of conical outside diameter being axially displaced and positioned in a barrel of conical inside diameter.

8. Process according to one of the preceding claims, characterized in that, by arranging the process measures in series and by selective temperature control of the melt, different types of thermoplastic material can be separated from one another.

9. Process according to one of the preceding claims, characterized in that coated, painted or fabric-covered thermoplastic parts can be separated in terms of their material, for example painted bumpers, panels and coated floor coverings.

10. Device for carrying out the process for continuously filtering polymer melt and for separating different thermoplastic materials on the basis of their different melting properties when subjected to a temperature increase, characterized by a rotationally driven double-channelled screw (1) which is arranged in a barrel (2) and the outside diameter of which is less than the inside diameter of the surrounding barrel (2) and thus forms a filtering gap (5), the first screw channel (4) being open towards the screw input side (3) and the second screw channel (6) being open towards the screw output side (7).

11. Device according to Claim 10, characterized by a multiple-channelled screw (1).

12. Device according to Claim 10 or 11, characterized by small grooves (12) provided on the outer side of the flight of the screw (1).

13. Device according to one of the preceding claims 10 to 12, characterized by a cavity in the interior of the screw and bores (13) which connect the grooves (12) to the cavity provided in the interior of the screw, the screw (1) being outwardly closed off on the screw output side (7) at its circumference with respect to the barrel (2).

## Revendications

1. Procédé de filtrage en continu de matière synthétique fondue et de séparation de différentes matières synthétiques thermoplastiques en raison de leurs caractéristiques de fusion différentes à température élevée, caractérisé en ce que l'interstice (5) formé, entre l'arête d'une vis sans fin rotative (1) et la paroi d'un cylindre (2) l'enveloppant, par la différence de diamètre entre le diamètre extérieur de la vis sans fin et le diamètre intérieur du cylindre, est utilisé spécifiquement comme interstice de filtrage (5), en ce que dans une vis sans fin (1) à deux filets, la matière fondue ne peut entrer du côté d'entrée (3) de la vis sans fin que dans un seul filet (4) de la vis sans fin et ne peut sortir du côté de sortie (7) de la vis sans fin que par le deuxième filet (6), et en ce que les deux filets (4, 6) de la vis sans fin ne possèdent qu'une liaison via l'interstice (5), de sorte que les impuretés sont retenues dans le premier filet (4) de la vis sans fin.

2. Procédé selon la revendication 1, caractérisé en ce que la vis sans fin (1) possède plus de deux filets.

3. Procédé selon l'une quelconque des revendications 1 ou 2, caractérisé en ce que des petites rainures supplémentaires (12), qui sont pratiquées sur le côté externe de l'arête et qui relient les filets, sont utilisées pour le filtrage.

4. Procédé selon l'une quelconque des revendications précédentes, caractérisé en ce que la matière fondue peut entrer du côté d'entrée (3) de la vis sans fin dans un filet (4) de la vis sans fin, mais ne peut pas sortir du côté de la sortie, et en ce qu'une rainure (12) et des alésages (13) se situent respectivement sur le côté frontal le long de l'arête de la vis sans fin, et à l'intérieur de la rainure (12), par l'intermédiaire desquels la matière fondue parvient dans l'intérieur de la vis sans fin, et de là, peut s'écouler à l'intérieur de la vis sans fin jusqu'à l'extrémité de la vis sans fin.

5. Procédé selon l'une quelconque des revendications précédentes, caractérisé en ce que le gâteau de filtre formé au niveau de l'interstice (5) est transporté par les mouvements de rotation de la vis sans fin (1) jusqu'à l'extrémité fermée du filet, où il peut être éliminé de manière contrôlée vers l'extérieur par une ouverture (11) dans le cylindre (2).

6. Procédé selon l'une quelconque des revendications précédentes, caractérisé en ce que la vis sans fin (1) est couplée à une vis sans fin de plastification d'une extrudeuse (A) placée en amont, directement ou par transmission par rapport à l'entraînement.

7. Procédé selon l'une quelconque des revendications précédentes, caractérisé en ce que la largeur de l'interstice peut être ajustée en déplaçant et en positionnant axialement une vis sans fin de diamètre extérieur conique dans un cylindre de diamètre intérieur conique.

8. Procédé selon l'une quelconque des revendications précédentes, caractérisé en ce que, grâce à une succession de mesures opératoires et un contrôle spécifique de la température de la matière fondue, diverses sortes de matières synthétiques thermoplastiques peuvent être séparées les unes des autres.

9. Procédé selon l'une quelconque des revendications précédentes, caractérisé en ce que des pièces en matière synthétique thermoplastique enduites, laquées ou enrobées d'un tissu sont séparées en fonction de leur matériau, par exemple pare-chocs automobiles laqués, habillages et revêtements de sol enduits.

10. Dispositif pour la mise en oeuvre du procédé de filtrage en continu de matière synthétique fondue et de séparation de différentes matières synthétiques thermoplastiques en raison de leurs caractéristiques de fusion différentes à température élevée, caractérisé par une vis sans fin (1) à deux filets entraînée en continu, disposée dans un cylindre (2), dont le diamètre extérieur est inférieur au diamètre extérieur du cylindre (2) l'enveloppant, et forme ainsi un interstice de filtrage (5), le premier filet (4) de la vis sans fin étant ouvert du côté de l'entrée (3) de la vis sans fin et le deuxième filet (6) de la vis sans fin étant ouvert du côté de la sortie (7) de la vis sans fin.

11. Dispositif selon la revendication 10, caractérisé par une vis sans fin (1) à plusieurs filets.

12. Dispositif selon la revendication 10 ou 11, caractérisé par de petites rainures (12) pratiquées sur le côté externe de l'arête de la vis sans fin (1).

13. Dispositif selon l'une quelconque des revendications 10 à 12 précédentes, caractérisé par un espace creux à l'intérieur de la vis sans fin et par des alésages (13), qui relient les rainures (12) avec l'espace creux prévu dans l'intérieur de la vis sans fin, la vis sans fin (1) étant fermée par rapport au cylindre (2) du côté de la sortie (7) de la vis sans fin vers l'extérieur à sa périphérie.
